Europäisches Patentamt

**European Patent Office**

**Office européen des brevets**

(19)

(11) Veröffentlichungsnummer: **0 175 054**
**A1**

(12) **EUROPÄISCHE PATENTANMELDUNG**

(21) Anmeldenummer: **85106433.7**

(51) Int. Cl.⁴: **A 61 C 13/00**, A 61 C 13/265

(22) Anmeldetag: **05.04.82**

(43) Veröffentlichungstag der Anmeldung: **26.03.86**
**Patentblatt 86/13**

(84) Benannte Vertragsstaaten: **CH DE LI**

(60) Veröffentlichungsnummer der früheren Anmeldung nach
Art. 76 EPÜ: **0064601**

(71) Anmelder: **Rübeling, Günter, Langener Landstrasse 173,
D-2850 Bremerhaven (DE)**
Anmelder: **Kreylos, Hans-Albert, Polderweg 4,
D-2857 Langen (DE)**

(72) Erfinder: **Kreylos, Hans-Albert, Polderweg 4,
D-2857 Langen (DE)**
Erfinder: **Zeiser, Manfred P. Dr., Im Wolfsgalgen 8,
D-7141 Schwieberdingen (DE)**

(54) **Verfahren zur Herstellung von Zahnersatzteilen.**

(57) Die Führungsflächen für ein Geschiebe und die Aufnahmen (45, 46) für ein Halteelement (25) werden unmittelbar in das individuell angefertigte Primärteil bzw. das ebenfalls individuell angefertigte Sekundärteil durch Funkenerosion eingearbeitet.

EP 0 175 054 A1

VERFAHREN ZUR HERSTELLUNG VON ZAHNERSATZTEILEN

Die Erfindung bezieht sich auf ein Verfahren zur Herstellung von Zahnersatzteilen gemäß den Merkmalen des Oberbegriffs des Anspruchs 1.

In der Zahntechnik wird in vielen Fällen ein Sekundärteil über ein Halteelement lösbar an einem Primärteil befestigt. Häufig werden dazu als Halteelemente sogenannte Riegel oder in anderen Fällen Friktionsstifte verwendet. Dabei kommt es entscheidend darauf an, daß die Aufnahmen für das Halteelement lagerichtig, passgenau und miteinander fluchtend ausgearbeitet werden, damit etwa für einen Friktionsstift eine ausreichende Reibung zwischen dem Stift und der Aufnahme gewährleistet ist und das Sekundärteil nicht unbeabsichtigt vom Primärteil abhebt. Insgesamt ist also festzustellen, daß die Qualität derartiger zahntechnischer Arbeiten entscheidend von der Form- und Passgenauigkeit der Aufnahmen oder Bohrungen für die Halteelemente abhängt. Entsprechendes gilt auch für Zahnersatzteile, bei denen das Primärteil und das Sekundärteil aufeinander abgestimmte Führungsflächen eines Geschiebes aufweisen, die zum Einführen des Außen- oder Sekundärteiles und zur Verbesserung bzw. Vergrößerung der Friktion dienen. Hier kommt es entscheidend auf die Genauigkeit dieser Führungsflächen an.

Aus der CH-A-459 461 ist eine Ausführung bekannt, bei der ein erstes Geschiebeteil (Patrize) mit einer Krone (Primärteil) und ein zweites Geschiebeteil (Matrize) mit dem Teilzahnersatz (Sekundärteil) verbunden, nämlich in diesen eingelassen ist.

Dabei werden Patrize und Matrize zunächst als konfektioniertes Einzelteil aus einer Edelmetallegierung hergestellt. Patrize und Matrize haben dabei aufeinander abgestimmte profilierte Führungsflächen. Zur Erstellung präziser, koaxial ausgerichteter Aufnahmen werden Patrize und Matrize lagerichtig übereinander gestülpt. Dann werden bei derartig vereinigten Geschiebeteilen die Aufnahmen gemeinsam in einem Arbeitsgang in Patrize und Matrize eingearbeitet.Die derart konfektionierten, also nicht für jedes Zahnersatzteil individuell angefertigten Geschiebeteile werden anschließend mit der Krone bzw. dem Teilzahnersatz verbunden.

Bei diesem bekannten Verfahren mag zwar ein guter Passitz der Halteelemente in den Aufnahmen und ein guter Passitz der Führungsflächen gewährleistet sein, doch ist dieses Herstellungsverfahren zeitraubend und kostspielig, weil zunächst die Geschiebeteile angefertigt oder zugekauft werden müssen.

In einem zahntechnischen Labor wurden daher bisher die Aufnahmen und die Führungsflächen am Primärteil in herkömmlicher Weise gebohrt oder gefräst, während die Aufnahmen und Führungsflächen am Sekundärteil beim Gießen des Sekundärteils geformt wurden. Aufgrund unvermeidlicher Toleranzen kann dabei nicht sichergestellt werden, daß die Aufnahmen später genau miteinander fluchten. In den meisten Fällen ist daher eine zeitraubende Nacharbeit erforderlich, damit die erforderliche Führung und der Sitz des Sekundärteiles auf dem Primärteil mit der erforderlichen Präzision erreicht wird.

Im Übrigen sind derartige Verfahren nur anwendbar, wenn man
Edelmetallegierungen als Werkstoff für das Primär- und das
Sekundärteil verwendet. Bei Verwendung edelmetallfreier
Legierungen ist nämlich wegen der größeren Härte etwa einer
Cr-Ni-Legierung ein Bohren oder Fräsen herkömmlicher Art
praktisch nicht möglich. Wegen der wesentlich höheren Verarbeitungstemperatur der edelmetallfreien Legierungen kann
die Aufnahme aber auch nicht so ohne weiteres beim Gießen
geformt werden, weil die übliche Platzhalter für derartige
Temperaturen nicht ausgelegt sind. Zusammenfassend kann also
gesagt werden, daß Zahnersatzteile der fraglichen Art aus
edelmetallfreien Legierungen bisher nicht hergestellt werden
konnten, obwohl dies wegen der in letzter Zeit beträchtlich
gestiegenen Kosten der Edelmetalle in erheblichem Maße
wünschenswert wäre.

Der vorliegenden Erfindung liegt daher die Aufgabe zugrunde,
ein Verfahren zur Herstellung derartiger Zahnersatzteile zu
schaffen, welches universell, also bei Verwendung von Legierungen
mit oder ohne Edelmetall einsetzbar ist, einen geringen Zeitaufwand erfordert und damit kostengünstig ist, aber trotzdem
die erforderliche Präzision gewährleistet und ohne Probleme
in einem zahntechnischen Labor angewandt werden kann.

Diese Aufgabe wird erfindungsgemäß mit den kennzeichnenden
Merkmalen des Anspruchs 1 gelöst.

Die vorliegende Erfindung beruht wesentlich auf dem Gedanken,

4

daß bei Einsatz des schonenden und ohne Druck auf das zu bearbeitende Teil durchgeführten Funkenerosionsverfahrens die Führungsflächen unmittelbar in das individuell angefertigte Primärteil eingearbeitet werden können, ohne daß dabei die Form dieses Teiles beeinträchtigt wird, was später eine Verschlechterung des Passitzes zur Folge hätte. Damit kann die kostspielige und zeitaufwendige Herstellung separater Geschiebeteile und der Arbeitsgang des Fixierens derartiger Geschiebeteile am Primärteil entfallen.

Das Funkenerosionsverfahren und die damit verbundenen Vorteile sind zwar seit Jahrzehnten allgemein bekannt. Auch im Bereich der Zahntechnik, nämlich zur Herstellung eines Mehrfach-Bukkal-Röhrchens ist dieses Verfahren bereits eingesetzt worden, wie die DE-A-2 616 767 zeigt. Dabei handelt es sich aber um die fabrikmäßige Großserienherstellung von Teilen, die später als Fertigteil in einem zahntechnischen Labor verarbeitet werden. Nach der vorliegenden Erfindung soll dagegen das Funkenerosionsverfahren nun aber unmittelbar am Primärteil zur einstückigen Ausbildung von Führungsflächen eingesetzt werden.

Das Funkenerosionsverfahren bietet eine Reihe gravierender Vorteile. Die Form der Führungsflächen ist durch entsprechende Formgebung der Elektrode frei wählbar. Eine Verformung der meist dünnen Seitenwände der bearbeiteten Teile ist nicht zu befürchten. Die Führungsflächen können ohne Schwierigkeiten auch in harte metallische Werkstoffe eingearbeitet werden.

5

Mit der vorliegenden Erfindung wird es daher erstmals möglich, Zahnersatzteile auch dann sicher zu führen und aneinander zu verankern, wenn beide Teile aus einer edelmetallfreien Legierung bestehen. Gegnüber den bisher üblichen Konstruktionen, bei denen wenigstens das Sekundärteil aus einer Edelmetall-Legierung hergestellt war, erzielt man damit bedeutende Kostenvorteile. Es sei aber an dieser Stelle deutlich darauf hingewiesen, daß das Verfahren auch dann mit Vorteil eingesetzt werden kann, wenn man Primär- und Sekundärteil aus Edelmetallen herstellt.

Besonders bevorzugt wird ein Verfahren mit den Merkmalen des Anspruchs 2, bei dem auch die Aufnahmen für den Friktionsstift mittels der Funkenerosion in die beiden Teile eingearbeitet werden. Einen besonders guten Passitz erreicht man dabei dadurch, daß die beiden Teile zunächst lagerichtig zusammengesetzt werden und dann in einem Arbeitsgang beide Aufnahmen geschaffen werden.

Gemäß einer anderen bevorzugten Weiterbildung der Erfindung wird das Primär- und/oder Sekundärteil inklusive Verblendung vollständig ausgearbeitet, bevor das Funkenerosionsverfahren angewendet wird.

Die Erfindung wird nachstehend anhand des in der Zeichnung dargestellten Ausführungsbeispieles näher erläutert. Die schematischen Zeichnungen sollen nur das Wesentliche zum Ausdruck bringen und sind nicht in allen Einzelheiten maßstabsgerecht ausgeführt. Es zeigen:

Fig. 1 Ansichten auf ein Primärteil und das zugehörige
Sekundärteil und

Fig. 2 Detaildarstellungen vor und nach der Verankerung
von Primärteil und Sekundärteil.


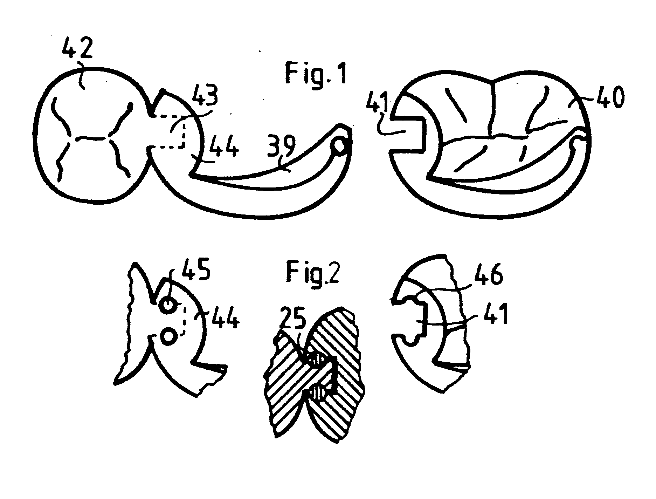

In Fig. 1 ist rechts eine Krone 40 dargestellt, die aus
Metall gefertigt ist und als Primärteil anzusehen ist.
In diese Krone 40 wird mit einer Elektrode mit rechteckigem
Querschnitt eine entsprechende Aussparung 41 eingearbeitet.
Diese Aussparung ist zum benachbarten Sekundärteil 42 randoffen. Nun wird das Sekundärteil 42 von dem Primärteil 40
abgeformt, wobei ein genau in die Aussparung passender Ansatz 43 gebildet wird. Damit sind unmittelbar an dem individuell angefertigten Primärteil 40 und an dem ebenfalls
individuell angefertigten Sekundärteil 42 Führungsflächen
gebildet, die einander genau angepaßt sind. Dabei wird bei
diesem Ausführungsbeispiel das Funkenerosionsverfahren zur
Bildung der Führungsflächen am Primärteil ausgenutzt.




Nach der individuellen Herstellung von Primärteil und Sekundärteil wird das Sekundärteil 42 lagerichtig auf das Primärteil 40 aufgesteckt. Durch die aufeinander abgestimmten
Führungsflächen an der Aussparung 41 und dem Ansatz 43 ist eine lagerichtige Zuordnung beider Teile gewährleistet.
Dann werden durch die Abstützfläche 44 am Sekundärteil 42
hindurchgehende Bohrungen 45 eingearbeitet, die in entsprechende Rillen übergehen. Bei diesem Arbeitsgang werden
zugleich Rillen 46 seitlich der Aussparung 41 in das Primärteil 40 eingearbeitet. Wiederum wird dazu das Funkenerosionsverfahren eingesetzt, wobei die Bohrungen bzw. Rillen, die als
Aufnahmen für einen Friktionsstift 25 dienen, in einem Arbeitsgang eingearbeitet werden, sodaß diese Aufnahmen genau miteinander fluchten. Die Friktionsstifte werden am Sekundärteil 42 fixiert und liegen teils in der Rille des Primärteils 40 und teils in der Rille des Sekundärteils 42, wie das
in dem Schnitt in Fig. 2 dargestellt ist. Auf diese Weise wird
also eine Art T-Geschiebe realisiert.

Primär- und Sekundärteil können aus edelmetallfreien Legierungen
hergestellt sein. Außerdem ist besonders darauf hinzuweisen,
daß die Teile vor der Anwendung des Funkenerosionsverfahrens
inklusive Verblendung bereits vollständig ausgearbeitet sein
können. Bei dem in der Zeichnung dargestellten Ausführungsbeispiel kann z.B. das Primärteil inklusive Verblendung im
Frontzahnbereich vollständig ausgearbeitet sein, bevor mittels
Funkenerosion die Aussparung 41 eingearbeitet wird. Das
Sekundärteil 42 kann inklusive Verblendung vollständig ausgearbeitet werden, bevor in einem Arbeitsgang die Aufnahmen
für die Friktionsstifte gebildet werden. Durch das vorherige
vollständige Ausarbeiten der Teile vermeidet man Verzerrungen
in den Führungsflächen bzw. den Aufnahmen für die Halteelemente.

VERFAHREN ZUR HERSTELLUNG VON ZAHNERSATZTEILEN

<u>Ansprüche</u>

1. Verfahren zur Herstellung von Zahnersatzteilen wie Kronen, Brücken, Teil- oder Vollprothesen etc mit einem festsitzenden metallischen Primärteil (40) und einem daran lösbar befestigten, ebenfalls aus Metall gefertigten Sekundärteil (42), wobei Primärteil (40) und Sekundärteil (42) Führungsflächen eines Geschiebes aufweisen, dadurch gekennzeichnet, daß die Führungsflächen unmittelbar in das Primärteil (40) durch Funkenerosion eingearbeitet werden.

2. Verfahren nach Anspruch 1, dadurch gekennzeichnet, daß in das Primärteil (40) zur Ausbildung eines sogenannten T-Geschiebes eine Aussparung (41) einerodiert wird, daß das Sekundärteil (42) einen in die Aussparung (41) passenden Ansatz (43) aufweist, daß beide Teile (40,42) lagerichtig zusammengesetzt werden und daß dann im Bereich des Ansatzes (43) bzw. der Aussparung (41) Bohrungen und/oder dachförmige Rillen (45,46) in das Primärteil (40) und das Sekundärteil (42) eingearbeitet werden, die zusammen die Aufnahmen für einen Friktionsstift (25) bilden.

3. Verfahren nach Anspruch 2, dadurch gekennzeichnet, daß die Aufnahmen (45,46) in einem Arbeitsgang gemeinsam durch Funkenerosion eingearbeitet werden.

4. Verfahren nach wenigstens einem der vorhergehenden Ansprüche, dadurch gekennzeichnet, daß das Primärteil (40) und/oder das Sekundärteil (42) vor der Anwendung des Funkenerosionsverfahrens inklusive Verblendung vollständig ausgearbeitet wird.

5. Verfahren nach wenigstens einem der vorhergehenden Ansprüche, dadurch gekennzeichnet, daß sowohl das Primärteil (40) als auch das Sekundärteil (42) aus einer edelmetallfreien Legierung oder einer Edelmetall-Legierung gefertigt werden.

0175054

Fig. 1

42

43

44   39

41   40

45   44

Fig. 2

25

46   41

Europäisches
Patentamt

**EUROPÄISCHER RECHERCHENBERICHT**

0175054
Nummer der Anmeldung

EP 85 10 6433

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 344 842 (CAMERON) * Spalte 1, Zeile 61 - Spalte 2, Zeile 45 * | 1 | A 61 C 13/00 A 61 C 13/265 |
| Y | DE-B-2 616 767 (DENTAURUM HANS-PETER WINKELSTROETER KG) * Spalte 3, Zeilen 15-20 * | 1 | |
| D,A | CH-A- 459 461 (SPANG) * Spalte 4, Zeilen 21-24; Figuren 4,5 * | 2,3 | |
| A | DE-B-1 928 150 (WEDENDAL) | | |

RECHERCHIERTE
SACHGEBIETE (Int. Cl.4)

A 61 C 13/00

Der vorliegende Recherchenbericht wurde für alle Patentansprüche erstellt.

| Recherchenort | Abschlußdatum der Recherche | Prüfer |
|---|---|---|
| BERLIN | 08-11-1985 | SIMON J J |